# EUROPEAN PATENT APPLICATION

(11) **EP 2 254 356 A1**
(43) Date of publication of application: **24.11.2010**
(21) Application number: 08721660.2
(22) Date of filing: 04.03.2008
(51) Int. Cl.: H04W 4/00, H04L 12/28, H04W 84/00, H04W 84/08

(54) **NETWORK SYSTEM AND MONITORING NODE**

(71) Applicant: Hitachi Ltd., Chiyoda-ku Tokyo 100-8280 (JP)
(72) Inventor: KATAOKA, Mikio, Tokyo 1008220 (JP); HANAOKA, Seishi, Tokyo 1008220 (JP)
(74) Representative: MERH-IP Matias Erny Reichl Hoffmann
(86) International application number: PCT/JP2008/054244
(87) International publication number: WO 2009/110103

(57) **Abstract**

In order to improve throughput in a whole network system, there is provided a network system controlling a plurality of wireless systems, comprising: access points of the respective wireless systems; gateways for terminating the respective wireless systems; a certificate authority; a home agent; a monitoring node; a control node; and terminal device connects to the plurality of wireless systems, wherein the monitoring node connects to the access points in the respective wireless systems and obtains information about the terminal device, the control node changes the wireless systems to which the terminal device connects in accordance with instructions of the monitoring node; and the terminal device selects one of the plurality of the wireless systems to which the terminal device connects in accordance with the information about the terminal device obtained by the monitoring node.

## Description

### BACKGROUND OF THE INVENTION

This invention relates to a technique of changing wireless communication systems at higher speed, and cognitive radio technology for improving the time use efficiency of frequency.

Nowadays, systems such as the third generation mobile phone systems and the wireless LAN systems are individually operated and managed by individual companies. To use the plurality of systems, it is necessary to subscribe to the systems with their respective companies. In such a case, since the systems are independent in the individual companies, the IP addresses of terminals, which are requisite for network connection, are given to the respective systems independently. Therefore, to use a plurality of systems simultaneously, it has been common to use the systems with a plurality of IP addresses.

However, the frequency band below 6 GHz (the VHF, UHF, and low microwave bands) convenient for mobile communication systems is now used densely by the third generation mobile phones, wireless LANs, and others, so conditions of radio waves are seriously tight. In such a circumstance, to secure a frequency band required for highly needed mobile communications while using the radio waves in tight conditions more effectively and efficiently, a technique is required that accomplishes advanced sharing of radio waves among a plurality of radio wave application systems including the mobile communications.

From a political standpoint, the "e-Japan Priority Policy Program - 2004" (June, 2004) by the IT Strategic Headquarters at the Ministry of Internal Affairs and Communications of Japan states that "practical use of a wireless communication system capable of establishing an optimum communication environment is aimed to be accomplished by 2011 while accurately determining the availability of radio waves in the periphery and conditions requested by an application program in use to flexibly select a frequency bandwidth, a modulation scheme, a multiplexing scheme, and the like". Accordingly, a technique for realizing the program has been requested.

To achieve such techniques, an idea of "cognitive radio" was presented in 1999 that recognizes the state of radio and controls the resources of the wireless systems depending on the state (for example, "Cognitive radio for flexible mobile multimedia communications", by Mitola, 1999 IEEE Int. Workshop on Mobile Multimedia Communications Digest (Nov. 1999) and "Cognitive Radio: Making Software Radios More Personal" by Mitola et al., 1999 IEEE Personal Communication, Vol.6, No.4 (1999)). However, there are various approaches to realize the cognitive radio and they are still being studied.

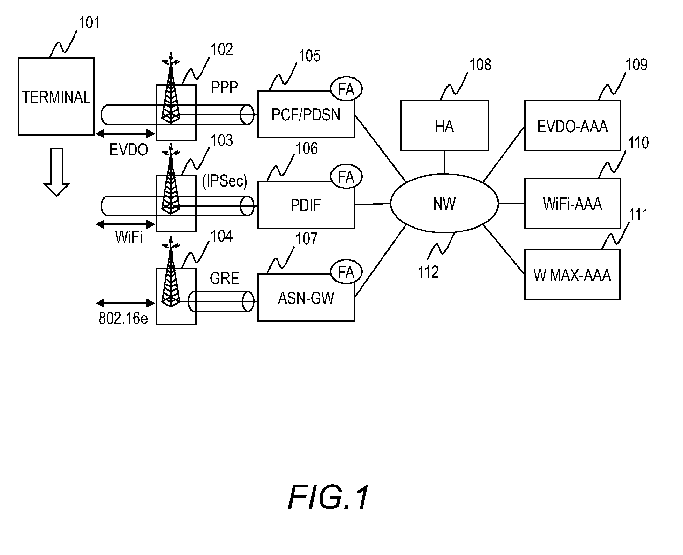

FIG. 1 illustrates an entire configuration of a conventional system with a plurality of wireless systems connected. In the example shown in FIG. 1, three systems are connected: cdma 1xEVDO (1xEVolution Data Only) as a cellular system, WiMAX as an outdoor wireless broadband system in an urban area, and a wireless LAN (Local Area Network) as a close-range or indoor broadband system. In the following descriptions, examples including these three systems will be explained, but other wireless systems may be applicable, as far as they have equivalent functions.

The system comprises a terminal (101) applicable to communications in these plurality of wireless systems, access points in those wireless systems ((102) for EVDO, (103) for the wireless LAN, and (104) for WiMAX), gateways for terminating the wireless systems (corresponding to a PDSN (Packet Data Serving Node) (105) for EVDO, a PDIF (Packet Data Interworking Function) (106) for the wireless LAN, and an ASN-GW (Access Service Network GateWay) (107) for WiMAX), certificate authorities for user authentications in the systems (corresponding to an EVDO-AAA (Authentication Authorization Accounting) (109) for EVDO, a WiFi-AAA (110) for the wireless LAN, and a WiMAX-AAA (111) for WiMAX), and an HA (Home Agent) (108). The gateways, the HA, and the certificate authorities which terminate each system are interconnected by a network (112).

In this system, the access points (102, 103, 104) in the wireless systems each have a function to terminate the wireless zone to the terminal.

The gateways like the PDSN, PDIF, and ASN-GW each have a function of FA (Foreign Agent) to the HA and a function to terminate the wireless system. Although an access point is connected with a gateway in each wireless system in FIG. 1, the number of access points is not limited to one but a plurality of access points are usually connected with each gateway.

Conventionally, the systems are independently operated, so the certificate authorities (109, 110, 111) exist independently and user authentications are performed independently in the use of the respective wireless systems.

In this event, the HA (108) manages which wireless system the terminal is currently using in the communication. Specifically, when viewed from the HA, the PDSN (105) behaves as a FA in EVDO, the PDIF (106) behaves as a FA in the wireless LAN, and the ASN-GW (107) behaves as a FA in WiMAX, and the HA has a table containing correspondence relations between the IP address of the gateway in the wireless system used in the current communication and the IP addresses given to the terminal.

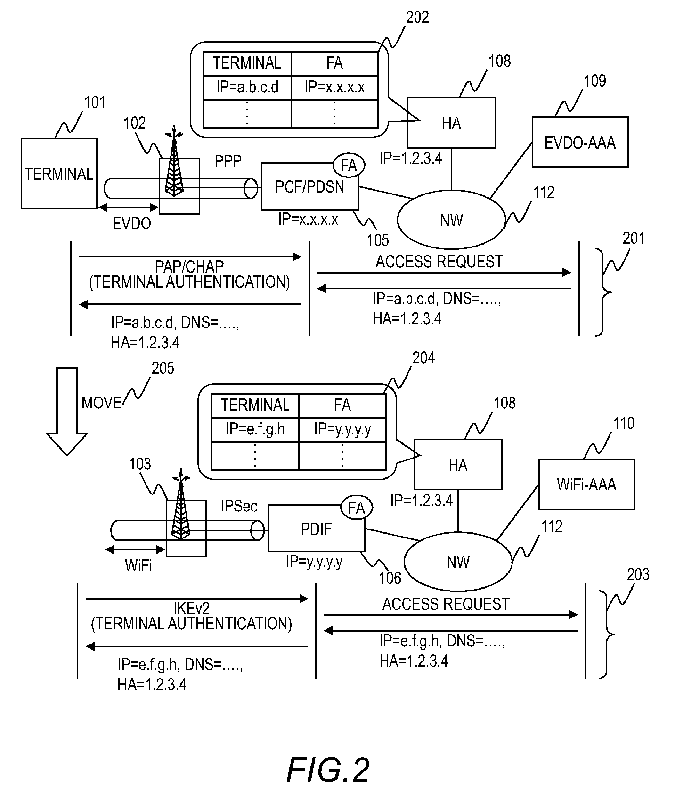

FIG. 2 illustrates a method of obtaining an IP address assigned to a terminal, a flow of changing the wireless system in use because of, for example, a transfer of the terminal, and the relationship between the IP addresses of gateways and the IP addresses of the terminal in a conventional example.

When the terminal (101) first connects to EVDO, a terminal authentication called PAP/ CHAP is performed between the terminal (101) and the PDSN (105) of the EVDO gateway as shown in the procedure (201). After the PDSN has authenticated the terminal, it sends an Access Request from the terminal (101) to the EVDO-AAA (109). The EVDO-AAA sends information such as an IP address to be given to the terminal (in the example of FIG. 2, the terminal's IP = a.b.c.d.), DNS information, and the HA's IP address (in the example of FIG. 2, the HA's IP = 1.2.3.4) to the PDSN (105) as a response to the Access Request, and the PDSN (105) transfers the information to the terminal (101) to assign the IP address to the terminal. At this time, the HA (108) stores a correspondence relation (202) between the terminal's IP address and the IP address of the PDSN as an FA (in the example of FIG. 2, the PDSN's IP address is x.x.x.x., so IP = x.x.x.x. is stored in the field of the FA).

If this terminal moves (205) and newly connects to, for example, the wireless LAN system, which is different from EVDO, a terminal authentication called IKEv2 is performed between the terminal and the PDIF (106) of the wireless LAN gateway as shown in the procedure (203). After the PDIF has authenticated the terminal, it sends an Access Request from the terminal (101) to the WiFi-AAA (110). The WiFi-AAA sends information such as an IP address to be given to the terminal (in the example of FIG. 2, the terminal's IP = e.f.g.h.), DNS information, and the HA's IP address (in the example of FIG. 2, the HA's IP = 1.2.3.4) to the PDIF (106) as a response to the Access Request, and the PDIF (106) transfers the information to the terminal (101) to assign the IP address to the terminal. At this time, the HA (108) stores a correspondence relation (204) between the terminal's IP address and the IP address of the PDIF as an FA (in the example of FIG. 2, the PDIF's IP address is y.y.y.y., so IP = y.y.y.y. is stored in the field of the FA).

As described in the above explanations about the conventional system, to change wireless systems, a user authentication is necessary in each system and the IP addresses given to the terminal because of the change of the systems are different depending on the wireless system. Furthermore, time in the order of seconds is required because a user authentication is performed from the terminal through the gateway at every change.

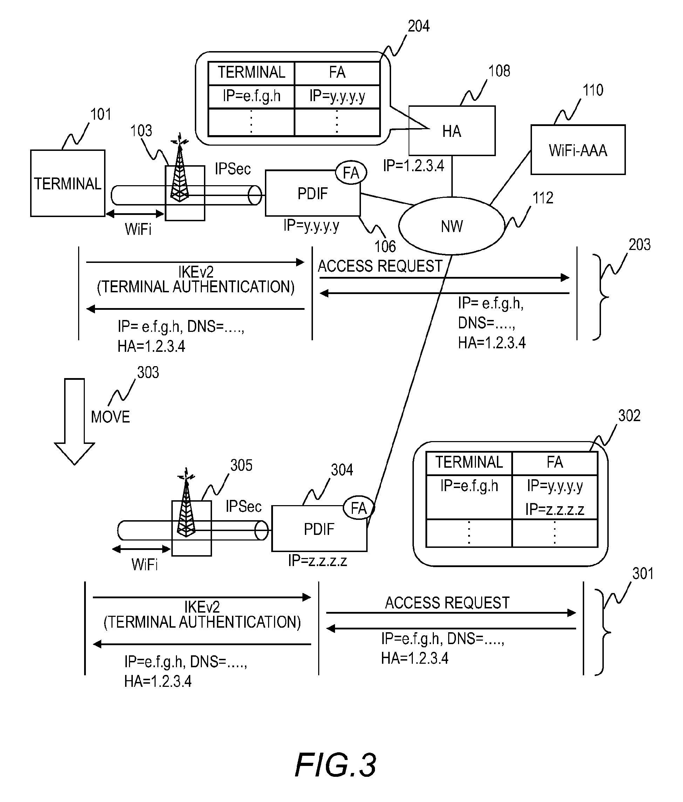

In a handover situation where the terminal has moved and connects with a plurality of gateways within a system, a change of the system is not necessary, so the same IP address is assigned to the terminal. FIG. 3 illustrates such a situation.

When the terminal (101) first connects to the wireless LAN system, the WiFi-AAA (110) assigns the terminal IP address IP = e.f.g.h to the terminal after a user authentication in IKEv2 (203) similar to the description with reference to FIG. 2. If this terminal moves (303) and works under another PDIF in the same wireless LAN system, a terminal authentication is performed again between the terminal (101) and the newly connected PDIF (304) as shown in the procedure (301). The WiFi-AAA (110) acknowledges that the terminal has already been registered in the system and then assigns the same IP address. At this time, the HA is in a handover situation with respect to the terminal (101), where data are transmitted from the both gateways, so the two PDIFs (106 and 304) are registered as FAs (302). In this situation, the data from a communication party on the network side is multicasted to both of the PDIF (106) and PDIF (304), with reference to the HA.

After the end of the handover situation, when the terminal (101) completely connects with the PDIF (304) only at the destination, the correspondence relation of the terminal's IP address to the FA's becomes the terminal's IP = e.f.g.h to the FA's IP = z.z.z.z. only (302).

As described above, although the HA can have a plurality of FA addresses for a single terminal IP within the same system in the conventional system, data are multicasted to the FAs in such a situation. Furthermore, a change of gateways take time in the order of seconds because a user authentication is performed at every gateway.

### SUMMARY OF THE INVENTION

In the conventional system, there has been a problem that, when a terminal newly uses another wireless system in a radio environment where a plurality of wireless systems are available for use, connecting to the wireless system on the user terminal's initiative causes the throughput to exceed the maximum value offered by the wireless system; consequently, the communication bandwidth requested by the terminal cannot be used, and further, the throughputs of the users who had used the wireless system until that time are affected so that the throughput in the whole system is reduced.

In addition, there has been another problem that even if the quality of communication in the wireless system used by a user terminal is degraded because of a change in the radio environment caused by, for example, a move of the user terminal, the conventional system continues to use the same wireless system as long as the session is not interrupted; thereby, the reduction in user throughput increases network delay.

To use a plurality of systems efficiently depending on the momentarily varying radio conditions, a representative aspect of this invention calculates, before a terminal newly connects to a wireless system or changes the wireless system into another, an expected throughput in the whole system and expected delay time in the case that the terminal connects to the wireless system, and controls the wireless system to be connected from the terminal depending on the estimation.

In addition, a representative aspect of this invention monitors the throughput and the delay time of each terminal, and if the quality of communication is degraded, for example, if the throughput decreases or the delay time increases, it predicts whether or not the quality of communication will be improved by changing the wireless system, and selects the wireless system to be used by the terminal in accordance with the results of the prediction.

According to this invention, an appropriate wireless system can be assigned to each terminal by considering radio environments for all terminals connecting to the system, so that the throughput in the whole system can improve.

### BRIEF DESCRIPTION OF THE DRAWINGS

FIG. 1 is a configuration diagram of a conventional system employing a plurality of wireless systems;
FIG. 2 is a diagram illustrating a conventional IP address assignment sequence while a terminal moves from a system to another system;
FIG. 3 is a diagram illustrating a conventional IP address assignment sequence while a terminal moves from a gateway to another gateway within the same system;
FIG. 4 is a configuration diagram of a system employing a plurality of wireless systems in this invention;
FIG. 5 is a flowchart illustrating a wireless system selection process according to this invention in the case that the priority is placed on the throughput in the whole system;
FIG. 6 is a flowchart illustrating a connectable wireless system count process in the flow of the wireless system selection process according to this invention in the case that the priority is placed in the throughput in the whole system;
FIG. 7 is a flowchart illustrating details of a wireless system selection process in the flow of the wireless system selection process according to this invention in the case that the priority is placed on the throughput in the whole system;
FIG. 8 is a flowchart illustrating a wireless system selection process in the case that the number of connectable systems is zero in the detailed flow of the system selection process in the flow of the wireless system selection process according to this invention in the case that the priority is placed on the throughput in the whole system;
FIG. 9 is a flowchart illustrating a wireless system selection process in the case that the number of connectable systems is one in the detailed flow of the system selection process in the flow of the wireless system selection process according to this invention in the case that the priority is placed on the throughput in the whole system;
FIG. 10 is a flowchart illustrating a wireless system selection process in the case that the number of connectable systems is two in the detailed flow of the system selection process in the flow of the wireless system selection process according to this invention in the case that the priority is placed on the throughput in the whole system;
FIG. 11 is a flowchart illustrating a wireless system selection process according to this invention in the case that the priority is placed on the transmission delay time;
FIG. 12 is a drawing showing a table for relating the currently selected wireless system of each terminal which is managed by the monitoring node of this invention to the throughput thereof;
FIG. 13 is a flowchart illustrating details of a wireless system selection process in the flow of the wireless system selection process according to this invention in the case that the priority is placed on the transmission delay time;
FIG. 14 is a drawing showing a table of delay time corresponding to throughputs in WiMAX and a table of the delay time corresponding to throughputs in WiFi, which are managed by the monitoring node of this invention;
FIG. 15 is a flowchart illustrating details of a WiFi delay time calculation process in the flow of the wireless system selection process in the case that the priority is placed on the transmission delay time;
FIG. 16 is a flowchart illustrating details of a WiMAX delay time calculation process in the flow of the wireless system selection process in the case that the priority is placed on the transmission delay time;
FIG. 17 is a flowchart illustrating a wireless system selection process according to this invention, which is triggered by a decrease in throughput;
FIG. 18 is a flowchart illustrating details of the wireless system selection process according to this invention, which is triggered by a decrease in throughput;
FIG. 19 is a flowchart illustrating a wireless system selection process according to this invention, which is triggered by an increase in transmission delay time; and
FIG. 20 is a flowchart illustrating details of the wireless system selection process according to this invention, which is triggered by an increase in transmission delay time.

### DETAILED DESCRIPTION OF THE EMBODIMENTS

### First Embodiment

A first embodiment of this invention will be described. In this embodiment, when a terminal changes wireless systems, the wireless system to be connected from the terminal is determined so as to maximize the system throughput.

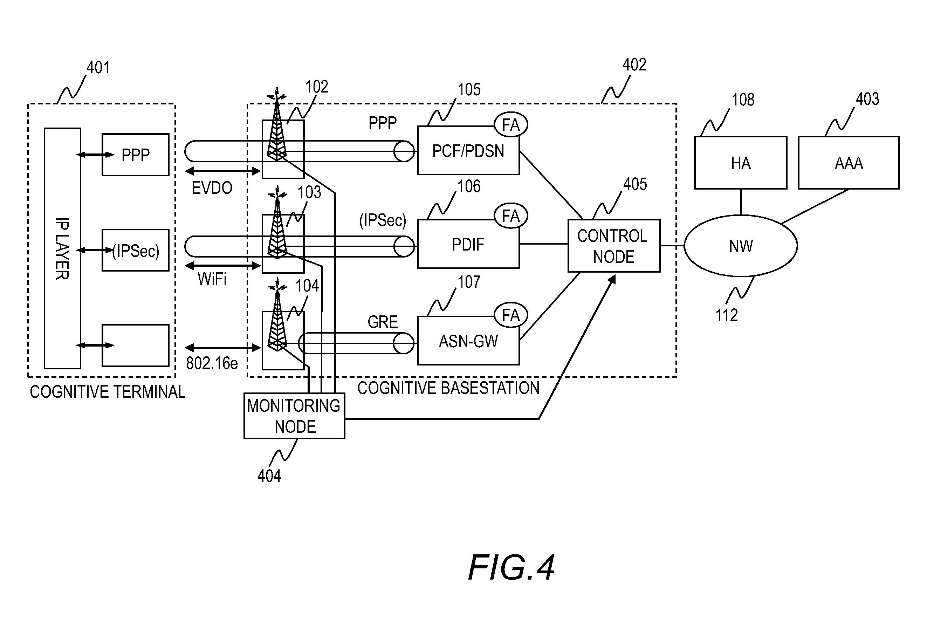

FIG. 4 illustrates a configuration of a system in this invention. To grasp the radio conditions of different wireless systems, the system comprises a monitoring node (CMT: Cognitive Monitoring Tool) (404) which collects information about radio from an access point in each wireless system. The information about radio includes received power values, RSSI values, throughputs of users, transmission rate, transmission delay time, packet loss rate, the number of terminals accommodated in an access point, the number of associations with a terminal, processing load at an access point. With respect to EVDO, values of parameters used for scheduling in a wireless zone, such as DRC values and RRI values, are also included in the radio information.

Further, the monitoring node has information about application programs to be used by users, such as TOS values in an IP header and a communication port number used by an application program.

Such information is statistically processed in the monitoring node, and further, space information such as the terminal's position and the moving direction is taken into account, to determine the wireless system to be assigned to each terminal.

The system further comprises a control node (PSF: Packet Switching Function) (405) between the upstream side of gateways (105, 106, 107) of the respective wireless systems and a network (112) for switching packets in accordance with instructions from the monitoring node (404). Furthermore, the system comprises a certificate authority (403) common to a plurality of wireless systems for assigning the same IP address to a terminal applicable to a plurality of wireless systems across the plurality of systems. FIG. 4 exemplifies three wireless systems to be used, EVDO, WiMAX, and WiFi (wireless LAN), but they may be other existing wireless systems or next generation wireless systems which will be developed in the future. The number of wireless systems to be used may be more than three.

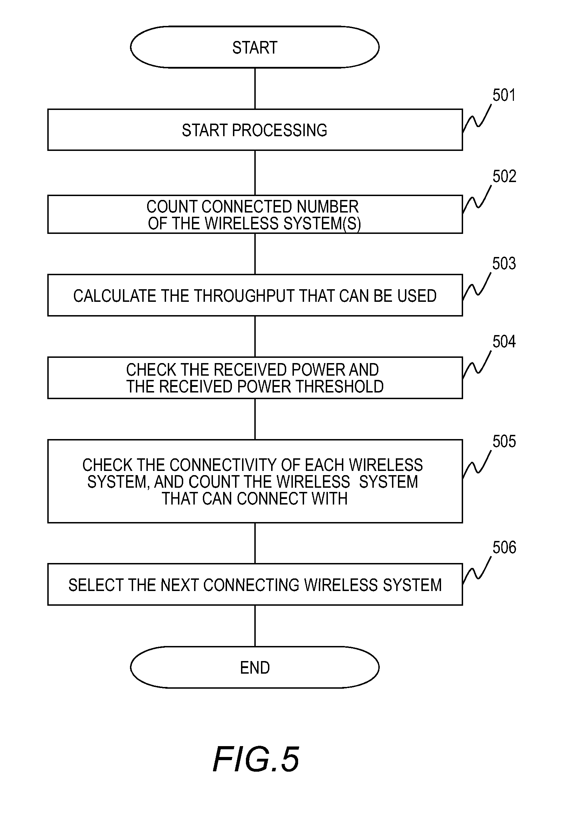

FIG. 5 illustrates a wireless system determination process by the monitoring node. The process is triggered when a terminal tries to change the wireless system into another one. Instead of the terminal's changing the wireless system into another, another terminal's try to start connecting to the system may be the trigger of the wireless system determination process. Alternatively, the trigger may be when another wireless system becomes available for use or when the wireless system in use by an existing terminal becomes unavailable for use, because of moving of the terminal connecting to the wireless system. Otherwise, the trigger may be when a communication starts because of a user's newly executing an application program or when a communication ends by ending the execution of an application program. The process may be performed periodically in all of the terminals in the system.

In the wireless system determination process, the monitoring node first initializes the threshold value of received power for determining the availability of communication in each wireless system, the maximum throughput available in each wireless system, and others (501). Next, it counts the terminals currently connecting to the system, except for the terminal (subject terminal) which triggered the process (502). Then, it calculates the throughput currently available in the unused bandwidth by excluding the throughput in the bandwidth actually occupied by the terminals except for the subject terminal from the maximum throughput (503). It compares the received power by the subject terminal with the threshold value determined at the initialization in each wireless system, and, if the received power exceeds the threshold value, it sets a flag (504).

Next, the monitoring node counts wireless systems connectable from the subject terminal (505), selects the system to be connected from the subject terminal (506), and determines the wireless system (the determined system) to be used by the subject terminal.

The monitoring node which has determined the wireless system to be used by the subject terminal instructs the control node to communicate with the subject terminal in the determined system, and the control node changes the wireless system used in the communication with the subject terminal in accordance with the instruction from the monitoring node.

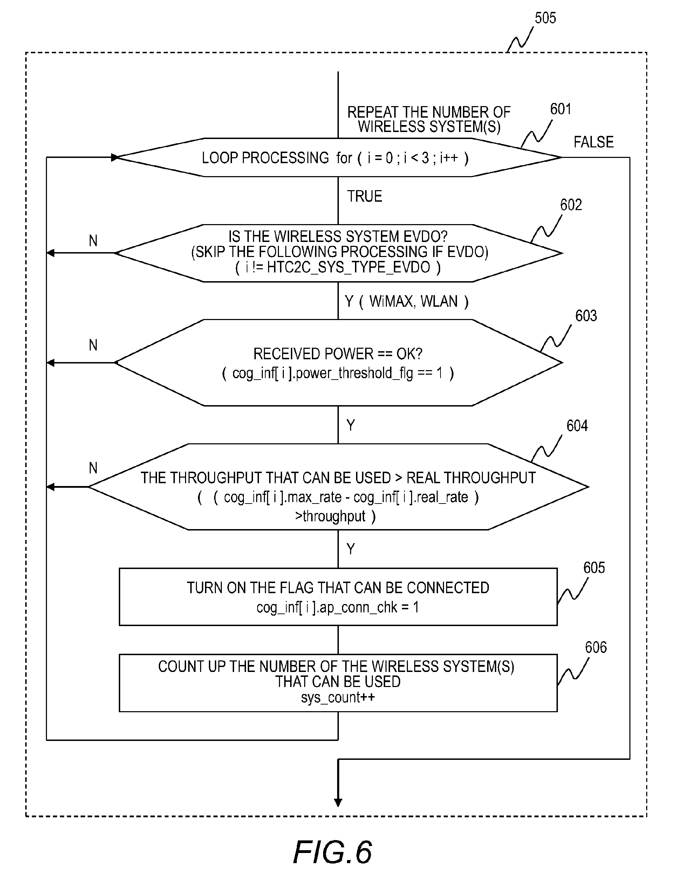

FIG. 6 illustrates the process of counting wireless systems connectable from the subject terminal in FIG. 5 (505) in detail. The process of counting wireless systems connectable from the subject terminal is repeated by the number of wireless systems available in the system (601). If the selected system is EVDO that covers the whole area of movement, the monitoring node determines that the terminal can be reached wherever it is, and skips the following processes (602). In this embodiment, EVDO is exemplified as a wireless system that can cover the whole area within which the terminal may move, but if there exist any other wireless systems that can cover the whole area of movement, the monitoring node may skip the process to those wireless systems.

Next, the monitoring node checks whether a flag indicating that the received power in the selected wireless system exceeds the threshold value has been set or not (603). If the flag indicating that the received power in the selected wireless system exceeds the threshold value has not been set, connection to the wireless system is not available, so the monitoring node proceeds to the determination on the next wireless system. If the flag has been set, it compares the throughput required by the subject terminal with the throughput available in the unused bandwidth in the system calculated in the step 503 (604). If the throughput available in the unused bandwidth exceeds the throughput required by the terminal, the monitoring node turns ON a flag indicating that the wireless system is connectable (605), and increments the number of connectable systems. The monitoring node performs these steps in all of the wireless systems within the system.

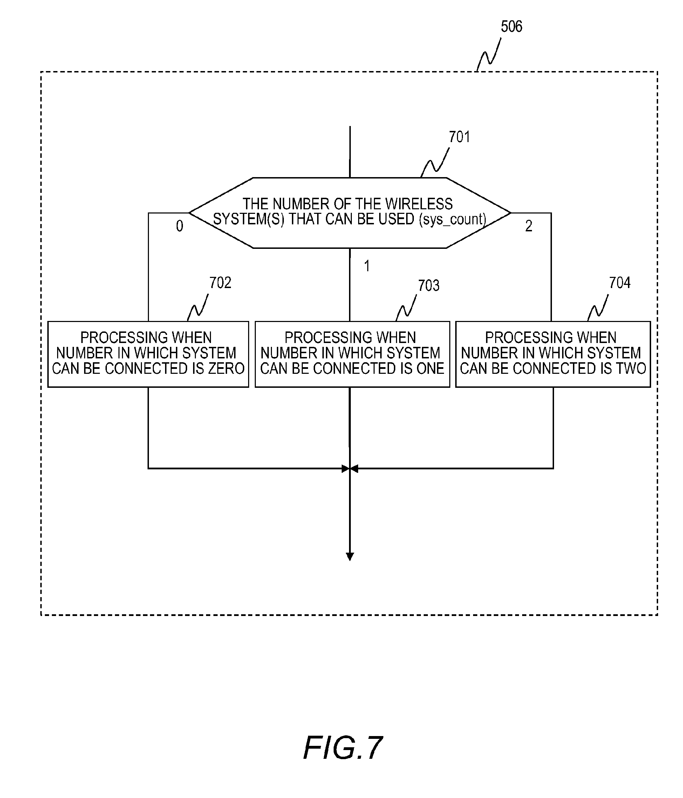

Next, the monitoring node executes a process of selecting the wireless system to be connected from the subject terminal (701 in FIG. 7), depending on the number of connectable wireless systems obtained in the process of counting wireless systems connectable from the subject terminal.

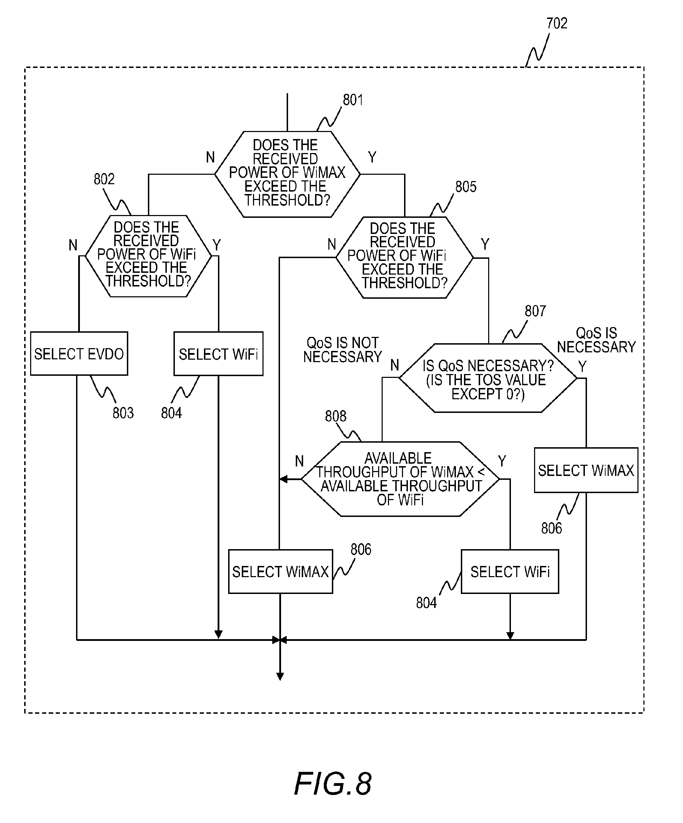

FIG. 8 illustrates the wireless system selection process in the case that the number of connectable wireless systems is 0 (702). In this case, the process determines the system with a priority to the wireless system that satisfies the threshold criterion of the received power. First, the monitoring node checks whether the received power in WiMAX exceeds the threshold value (801). If it does not exceed the threshold value, the monitoring node checks whether the received power in WiFi exceeds the threshold value (802).

If the received power in WiFi does not exceed the threshold value, either, the connectable wireless system is EVDO only, so the monitoring node selects EVDO as the system to be connected (803). If the received power in WiFi exceeds the threshold value, it selects WiFi as the system to be connected (804).

If the received power in WiMAX exceeds the threshold value, the monitoring node checks the received power in WiFi (805). If it does not exceed the threshold value, the monitoring node selects WiMAX as the system to be connected (806). If it exceeds the threshold value, the monitoring node checks whether the QoS is necessary for the communication requested by the user or not (807). In this embodiment, the monitoring node refers to the value in the TOS field in an IP packet to determine the necessity of QoS; if the TOS value is 0, the monitoring node determines that the QoS is not necessary. The necessity of QoS may be determined by referring to the port number to be used in the communication and a prepared relation table between port numbers and the necessity of the QoS.

The monitoring node compares the throughput available in the unused bandwidth in WiMAX with that in WiFi (808), and if the throughput available in the unused bandwidth in WiMAX is greater than that in WiMAX, it selects WiMAX as the system to be connected (806). Otherwise, it selects WiFi (804). If QoS is needed, it selects WiMAX (806).

In this embodiment, the selection is made between WiMAX which can guarantee the QoS and WiFi which cannot guarantee the QoS. However, if there are a plurality of wireless systems which can guarantee the QoS, the monitoring node selects the wireless system whose available throughput in the unused bandwidth is great. Alternatively, priority orders may be placed to the wireless systems which can guarantee the QoS depending on the quality of guarantee, and further, depending on the quality of communication required by application programs, and then, the monitoring node may select the wireless system to be connected depending on the association of the priorities. It is the same in the case that there are a plurality of wireless systems that cannot guarantee the QoS.

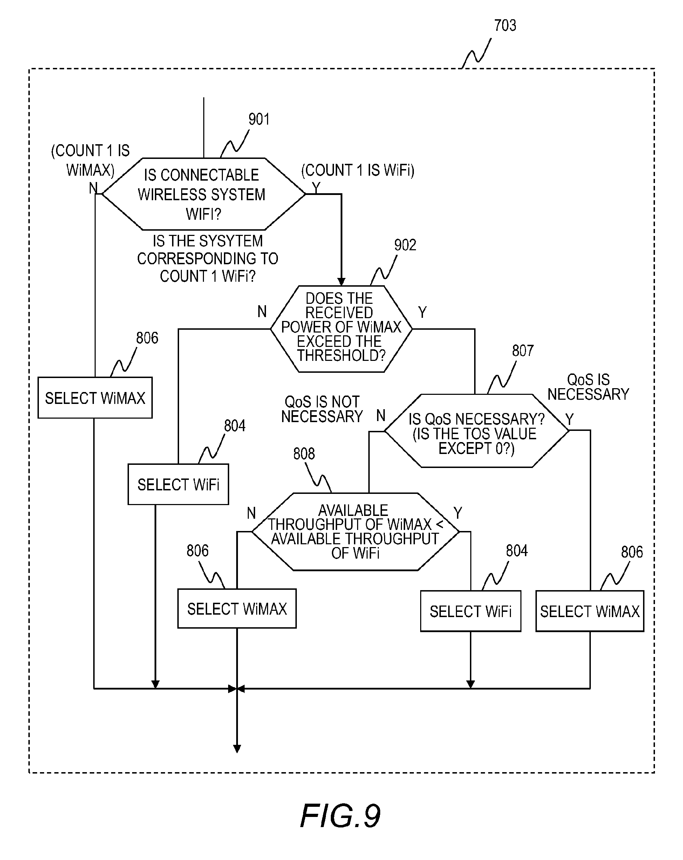

FIG. 9 illustrates the process of selecting a wireless system in the case that the number of connectable wireless system is one (703). In this case, the monitoring node determines which the connectable wireless system is, WiMAX or WiFi (901). If the connectable wireless system is WiMAX, it selects WiMAX because it can be determined that the QoS is guaranteed and the unused bandwidth is sufficient.

If the connectable wireless system is WiFi, the monitoring node subsequently checks whether the received power in WiMAX exceeds the threshold value or not (902). If the received power in WiMAX does not exceed the threshold value, it selects WiFi as the wireless system to be connected. If the received power in WiMAX exceeds the threshold value, the operations following to this step is the same as the process explained with reference to FIG. 8. Therefore, those steps are denoted by the same reference numerals as in FIG. 8 and the explanations will be omitted.

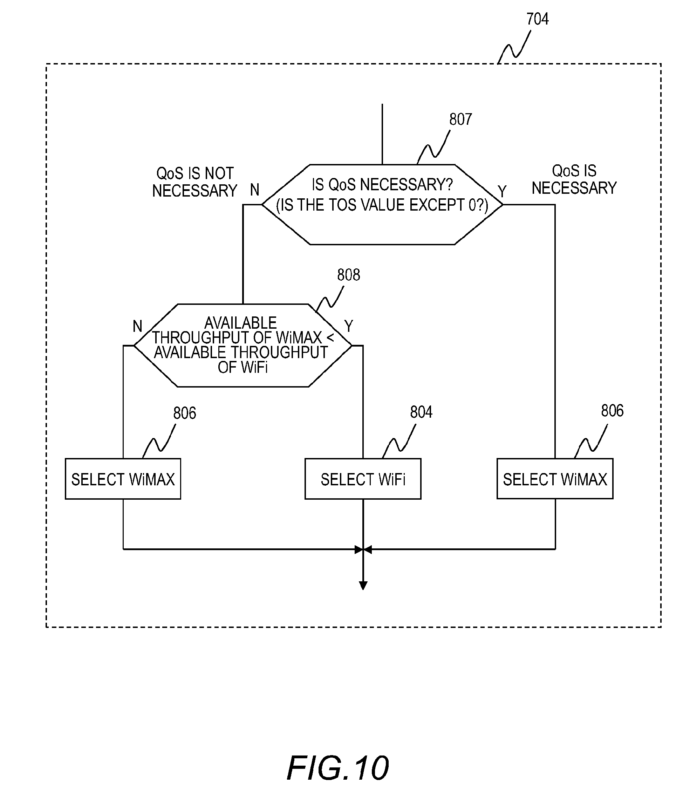

FIG. 10 illustrates the process of selecting a wireless system in the case that the number of connectable wireless system is two (704). The flow of the process is the same as a part of the process illustrated in FIG. 8, so the steps are denoted by the same reference numerals as in FIG. 8 and the explanations will be omitted.

As set forth above, according to the first embodiment, in changing wireless systems used by the terminal, an estimated throughput after the change of the wireless systems is preliminarily calculated. Accordingly, the wireless system to be connected from the terminal can be selected on the basis of the calculated results so that the system throughput will be the maximum.

### Second Embodiment

Hereinafter, a second embodiment in the present invention will be described. In this embodiment, when the terminal changes wireless systems, the system to be connected from the terminal is determined so that the delay time will be the minimum.

Similarly to the first embodiment, this embodiment employs the system configuration shown in FIG. 4. A wireless system determination process when a terminal AT0 tries to change the connected system from WiMAX to another system will be described.

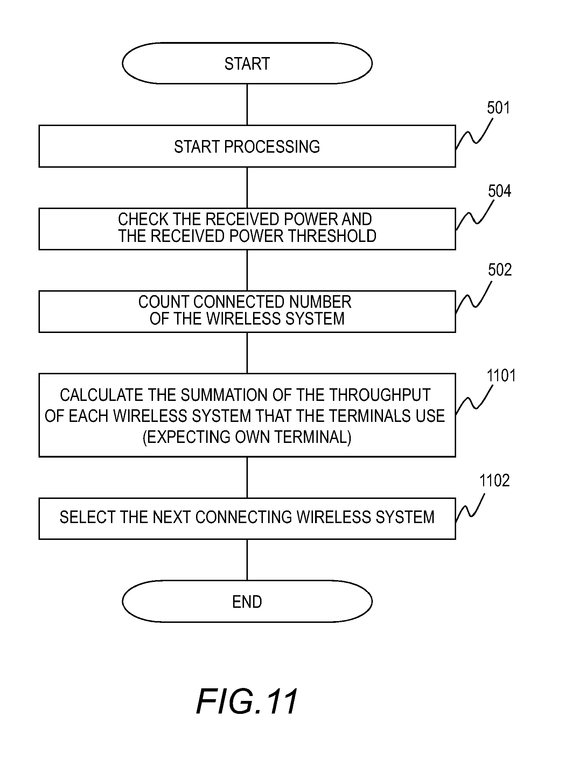

FIG. 11 illustrates a wireless system determination process by the monitoring node. A part of the steps in the process shown in FIG. 11 are the same as those in FIG. 5; they are denoted by the same reference numerals. The wireless system determination process is triggered when the terminal AT0 tries to change the currently connected WiMAX into another wireless system. Instead of the terminal's changing the wireless system to another, another terminal's try to start connecting to the system may be the trigger of the wireless system determination process. Alternatively, the trigger may be when another wireless system becomes available for use or when the wireless system in use by an existing terminal becomes unavailable for use, because of moving of the terminal currently connecting to the wireless system. Otherwise, the trigger may be when a communication starts because of a user's newly executing an application program or when a communication ends by ending the execution of an application program. The process may be performed periodically in all of the terminals in the system.

In the wireless system determination process, the monitoring node first initializes the threshold value of received power for determining the availability of communication in each wireless system, the maximum throughput in each wireless system, and others (501). Next, it compares the received power by the subject terminal with the threshold value determined at the initialization in each wireless system, and, if the received power exceeds the threshold value, it sets a flag (504). It counts the terminals currently connecting to the system, except for the terminal (subject terminal) which triggered the process (502).

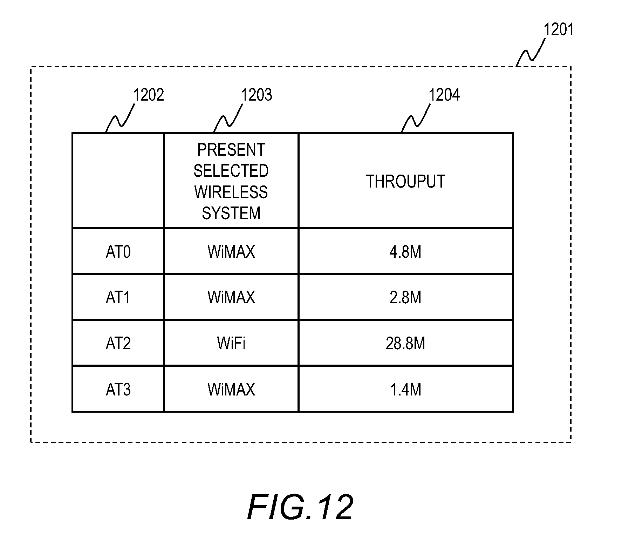

Next, the monitoring node calculates the sum of the throughputs of the terminals except for the subject terminal (ATO) in each wireless system (1101). For example, if the monitoring node has a table (1201), like the one shown in FIG. 12, that associates the wireless system (1203) currently connected from each terminal and the throughput (1204) of each terminal, the throughput in WiMAX is the sum of the throughputs of AT1 and AT3, which are currently connected to WiMAX, 4.2 Mbps, and the throughput in WiFi is the throughput of AT2 which is currently connected to WiFi, 28.8 Mbps.

Then, the monitoring node performs a selection process of the system to be connected from the subject terminal (1102) to determine the wireless system (the determined system) to be used by the subject terminal. The monitoring node that has determined the wireless system to be used by the subject terminal instructs the control node to communicate with the subject terminal in the determined system, and the control node changes the wireless system to be used in the communication with the subject terminal in accordance with the instruction from the monitoring node.

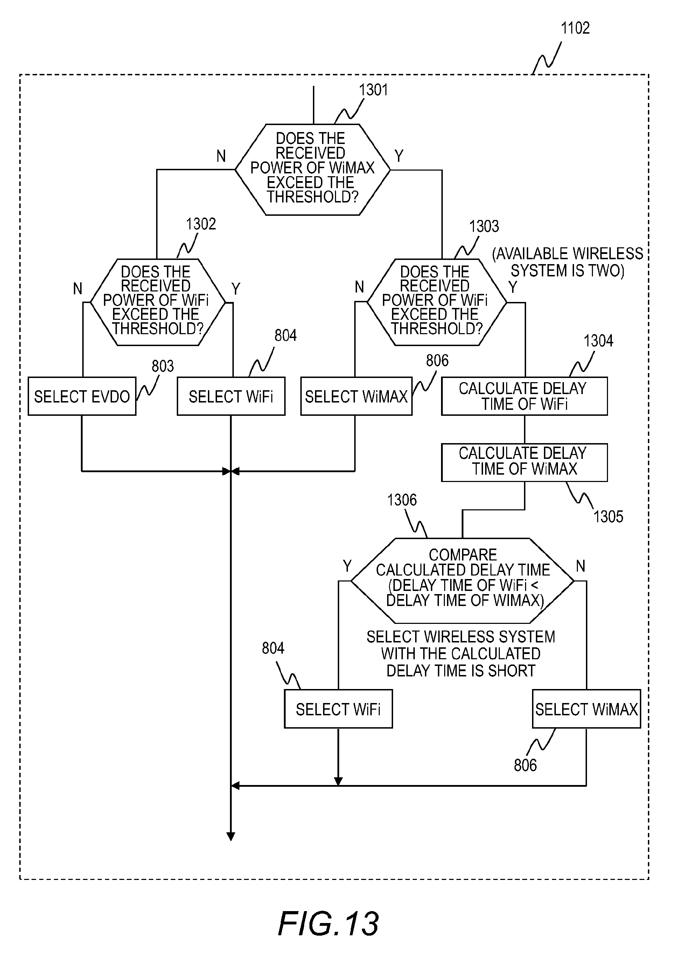

FIG. 13 illustrates the wireless system selection process (1102) in detail. First, the monitoring node checks whether the received power in WiMAX exceeds the threshold value or not (1301). If it does not exceed the threshold value, the monitoring node checks whether the received power in WiFi exceeds the threshold value (1302). If the received power in WiFi does not exceed the threshold value, either, the wireless system that can be connected is EVDO only, so the monitoring node selects EVDO as the system to be connected (803). If the received power in WiFi exceeds the threshold value, it selects WiFi as the system to be connected (804).

If the received power in WiMAX exceeds the threshold value, the monitoring node checks the received power in WiFi (1303). If it does not exceed its threshold value, the monitoring node selects WiMAX as the system to be connected (806). If it exceeds the threshold value, the monitoring node calculates the transmission delay time in the case that the subject terminal is connected to WiFi (1304) and the transmission delay time in the case that the subject terminal keeps connection to WiMAX (1305). Then, it compares the expected transmission delay time obtained in the step of (1304) and the one obtained in the step (1305) (1306), and selects the wireless system with shorter delay time to determine the wireless system to be connected from the subject terminal.

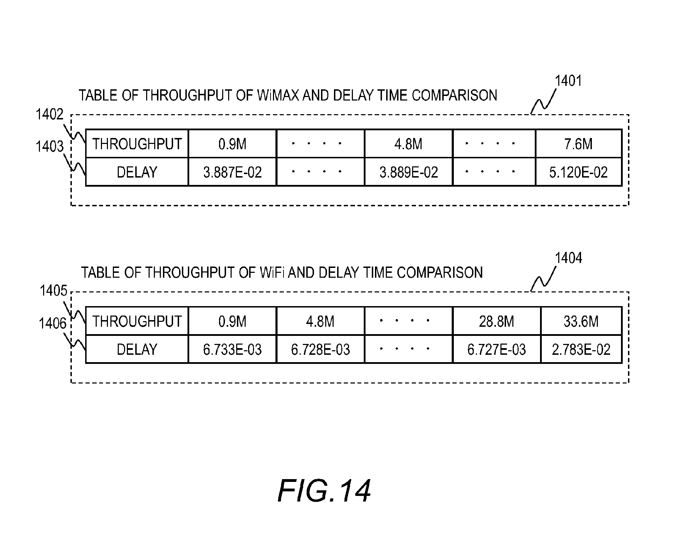

FIG. 14 provides tables storing the correspondence relations of the throughputs (1402, 1405) and the delay time (1403, 1406) to be used in estimating the transmission delay time. These tables are delay time tables (1401, 1404) corresponding to the throughputs in WiMAX and WiFi, respectively, except for in EVDO, which is always connectable. The information in these tables is preliminarily measured values or estimated values obtained through simulations, for example.

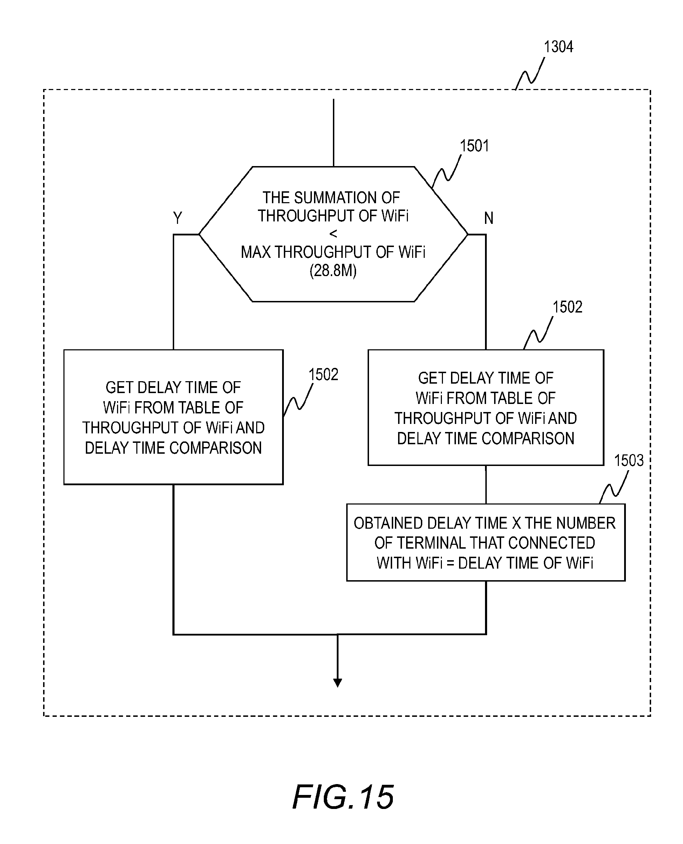

FIG. 15 illustrates a delay time calculation process in WiFi (1304) in detail. First, the monitoring node adds the throughput of the subject terminal (ATO) to the throughput in WiFi obtained in the step (1101) of FIG. 11, and compares the sum with the maximum throughput in WiFi (1501). If the total throughput of the terminals is less than the maximum throughput in WiFi, the monitoring node obtains the delay time from the table of delay time corresponding to throughputs in WiFi (1502) using the throughput of AT0 as a key.

If the total throughput of the terminals is more than the maximum throughput in WiFi, the monitoring node obtains the delay time from the table of delay time corresponding to throughputs in WiFi (1502) using the throughput of AT0 as a key, and then determines the delay time in WiFi by multiplying the obtained delay time by the number of terminals to be connected to WiFi (where the subject terminal should be included, assuming that the subject terminal is connecting) (1503).

In this embodiment, since the throughput in WiFi is 28.8 Mbps and the throughput of AT0 is 4.8 Mbps, the total throughput in WiFi is 33.6 Mbps. If it is assumed that the maximum throughput in WiFi is 28.8 Mbps, it exceeds the maximum throughput. Therefore, the delay time in WiFi is the value obtained by multiplying the delay time (6.728E-03), which is obtained from the table of delay time corresponding to throughputs in WiFi using 4.8 Mbps of AT0's throughput as a key, by the number of connecting terminals of 2 (existing AT2 connecting to WiFi and ATO).

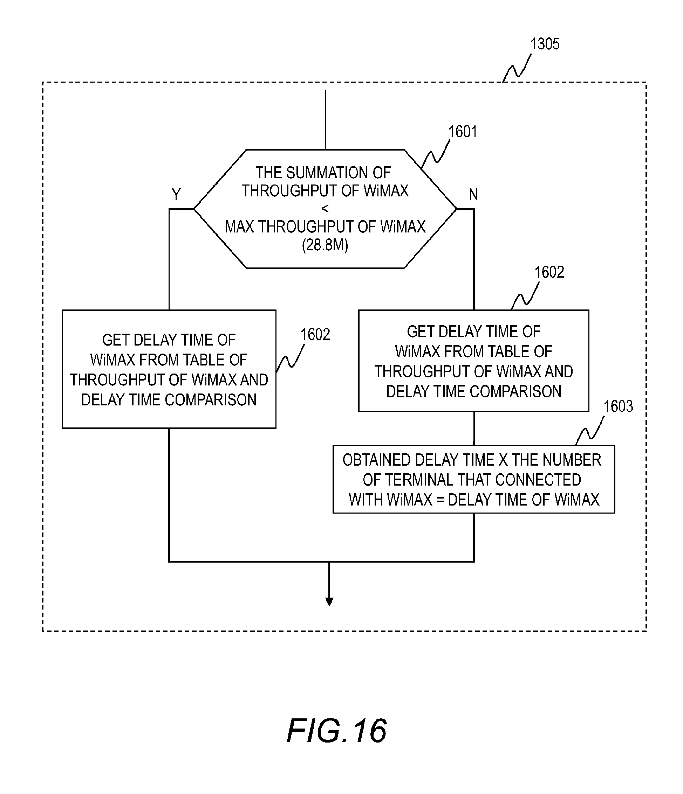

FIG. 16 illustrates a delay time calculation process in WiMAX (1305) in detail. First, it adds the throughput of the subject terminal (ATO) to the throughput in WiMax obtained in the step (1101) in FIG. 11, and compares the sum with the maximum throughput in WiMAX (1601). If the total throughput of the terminal is less than the maximum throughput in WiMAX, it obtains the delay value from the table of throughputs vs. delay time in WiMAX (1602) using the throughput of AT0 as a key.

If the total throughput is more than the maximum throughput in WiMAX, the monitoring node obtains the delay time from the table of delay time corresponding to throughputs in WiMAX (1602) using the throughput of AT0 as a key, and then determines the delay time in WiMAX by multiplying the obtained delay time by the number of terminals to be connected to WiMAX (where the subject terminal should be included, assuming that the subject terminal is connecting) (1603).

In this embodiment, since the throughput in WiMAX is 4.2 Mbps and the throughput of AT0 is 4.8 Mbps, the total throughput in WiMAX is 9.0 Mbps. If it is assumed that the maximum throughput in WiMAX is 6.4 Mbps, it exceeds the maximum throughput. Therefore, the delay time in WiMAX is the value obtained by multiplying the delay time (3.889E-02), which is obtained from the table of delay time corresponding to throughputs in WiMAX using 4.8 Mbps of AT0's throughput as a key, by the number of connecting terminals of 3 (existing AT1 and AT3 connecting to WiMAX and ATO).

Compared the delay time (6.728E-03) × 2 in the case that the terminal AT0 connects to WiFi with the calculated delay time (3.889E-02) × 3 in the case of that the terminal AT0 connects to WiMAX, the estimated delay time in the case that it connects to WiFi is shorter. Therefore, WiFi is selected as the wireless system to be connected from the terminal AT0. Since the wireless system connected from the AT0 has been WiMAX, a change of the wireless system occurs, from WiMAX to WiFi.

As set forth above, according to the second embodiment, in changing wireless systems used by the terminal, an estimated delay time after the change of wireless systems can be preliminarily calculated. Accordingly, the wireless system to be connected from the terminal can be selected so that the delay time will be the minimum.

The monitoring node according to the first and the second embodiments selects the wireless system to be connected from the terminal with the target values of the maximum throughput in the whole system and the shortest transmission delay time. In addition, the monitoring node may selects the wireless system to be connected from the terminal with the target values of the maximum satisfaction (guarantee) level in the user's QoS in the whole system and the minimum fluctuation in transmission time in the whole system.

### Third Embodiment

A third embodiment of this invention will be described. In this embodiment, the monitoring node periodically monitors the throughput of each terminal, and if it detects a decrease in the throughput, it determines whether to change the wireless system to accomplish efficient use of communication bandwidth in the whole system.

Similarly to the first embodiment, this embodiment employs the system configuration shown in FIG. 4. The monitoring node periodically measures the throughputs of all of the terminals currently connecting to the system to determine whether to change the wireless system in each terminal.

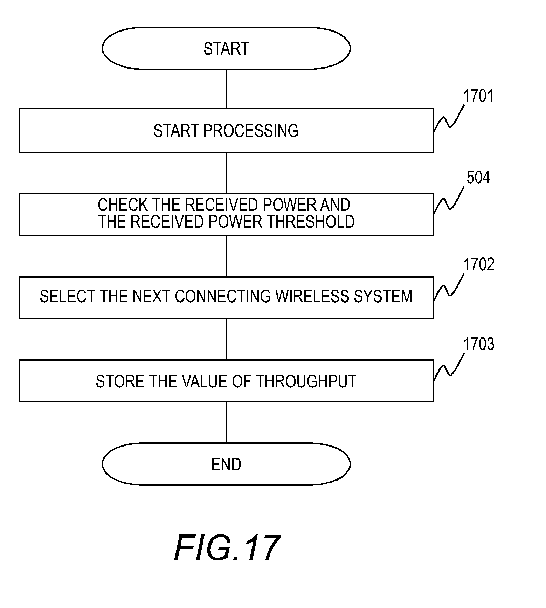

FIG. 17 illustrates a process of determining the change of the wireless system by the monitoring node. A part of the steps in the process shown in FIG. 17 is the same as those in FIG. 5; they are denoted by the same reference numerals. First, the monitoring node initializes the threshold value of received power and the maximum throughput in each wireless system (1701). Then, it checks whether the received power by the terminal which is subjected to the wireless system change determination process exceeds the threshold value in each wireless system, and, if the received power exceeds the threshold value, it sets a flag (504).

Next, it selects a wireless system using throughputs (1702) to determine the wireless system to be connected from the subject terminal. After that, it stores the current throughput of the subject terminal obtained in the step (1702) to use it in the following determination (1703).

The monitoring node that has determined the wireless system to be used by the subject terminal instructs the control node to communicate with the subject terminal in the determined system, and the control node changes the wireless system to be used in the communication with the subject terminal in accordance with the instruction from the monitoring node. If the determined system is the wireless system which has been connected from the subject terminal, the monitoring node does not instruct the change of the wireless system to the control node.

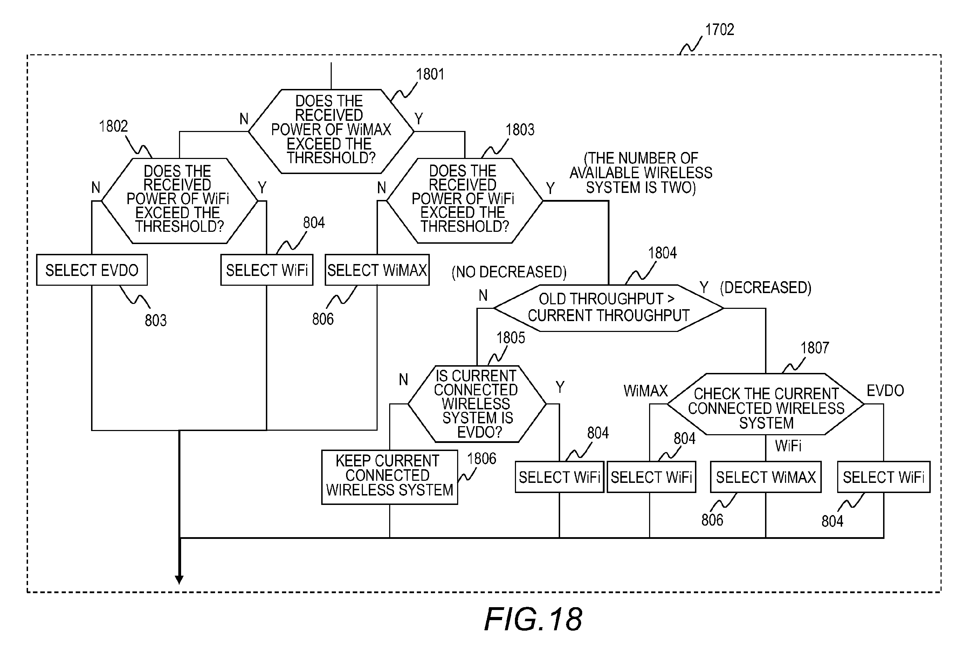

FIG. 18 illustrates the wireless system selection process (1702) according to this embodiment in detail. First, the monitoring node checks whether the received power in WiMAX exceeds the threshold value or not (1801). If it does not exceed the threshold value, the monitoring node checks whether the received power in WiFi exceeds the threshold value (1802). If the received power in WiFi does not exceed the threshold value, either, the connectable wireless system is EVDO only, so the monitoring node selects EVDO as the system to be connected (803). If the received power in WiFi exceeds the threshold value, it selects WiFi as the system to be connected (804).

If the received power in WiMAX exceeds the threshold value, the monitoring node checks the received power in WiFi (1803). If it does not exceed its threshold value, the monitoring node selects WiMAX as the system to be connected (806). If it exceeds the threshold value, the monitoring node obtains the throughput of the subject terminal at present (current throughput) and compares it with the throughput of the subject terminal previously stored (previous throughput) (1804). If there is no decrease from the previous throughput to the current throughput, it checks whether the wireless system currently connected from the subject terminal is EVDO or not (1805). If the current wireless system connected from the subject terminal is not EVDO, it keeps the current system and does not change the wireless system (1806). If the current system is EVDO, it selects WiFi as the wireless system to be connected from the subject terminal.

If there is a decrease from the previous throughput to the current throughput, the monitoring node changes systems. To prevent frequent changes of wireless systems because of slight variations in the throughput, the monitoring node does not determine that the throughput has decreased if the decrease is within a predetermined range. Here, the predetermined range is the variation in the throughput within 3%, for example.

Next, the monitoring node checks the current system connected from the subject terminal (1807), and if the current system is WiMAX, it selects WiFi. If the current system is WiFi, it selects WiMAX. If EVDO, it selects WiFi. In this embodiment, the monitoring node selects the wireless system to be connected so as to make communication as fast as possible. However, it may select the wireless system in view of the quality of communication which is required by a user application program, instead of the transmission speed.

As set forth above, according to the third embodiment, the monitoring node periodically monitors the throughput of each terminal, and, if it detects a decrease in the throughput, it determines whether to change the wireless system. Thereby, the communication bandwidth in the whole system can be used efficiently.

### Fourth Embodiment

A fourth embodiment of this invention will be described. In this embodiment, the monitoring node periodically monitors the transmission delay time of each terminal, and if it has detected an increase in the transmission delay time, it determines whether to change the wireless system to accomplish the minimum transmission delay time in the whole system.

Similarly to the first embodiment, this embodiment employs he system configuration shown in FIG. 4. The monitoring node periodically measures the transmission delay time of all of the terminals currently connecting to the system to determine whether to change the wireless system in each terminal.

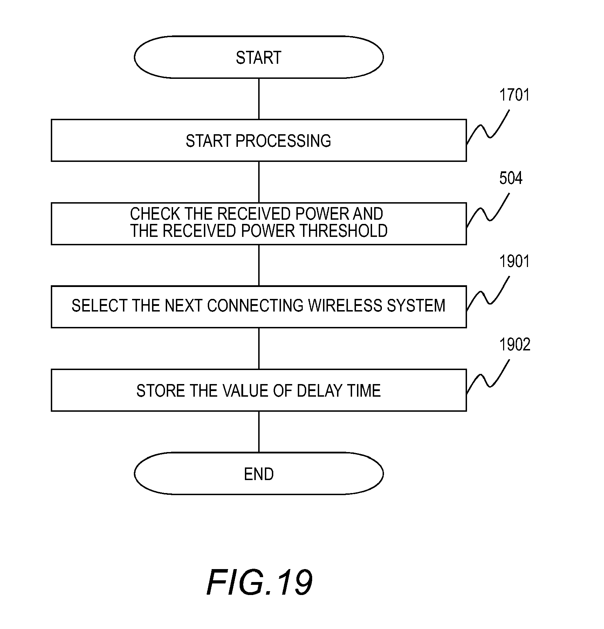

FIG. 19 illustrates a process of determining the change of the wireless system by the monitoring node. A part of the steps in the process shown in FIG. 19 is the same as those in FIG. 5 and FIG. 17; they are denoted by the same reference numerals. First, the monitoring node initializes the threshold value of received power and the maximum throughput in each wireless system (1701). Then, it checks whether the received power by the terminal which is subjected to the wireless system change determination process exceeds the threshold value in each wireless system, and, if the received power exceeds the threshold value, it sets a flag (504).

Next, it selects a wireless system using throughputs (1901) to determine the wireless system to be connected from the subject terminal. After that, it stores the current transmission delay time of the subject terminal obtained in the step (1901) to use it in the following determination (1902).

The monitoring node that has determined the wireless system to be used by the subject terminal instructs the control node to communicate with the subject terminal in the determined system, and the control node changes the wireless system to be used in the communication with the subject terminal in accordance with the instruction from the monitoring node. If the determined system is the wireless system which has been connected from the subject terminal, the monitoring node does not instruct the change of the wireless system to the control node.

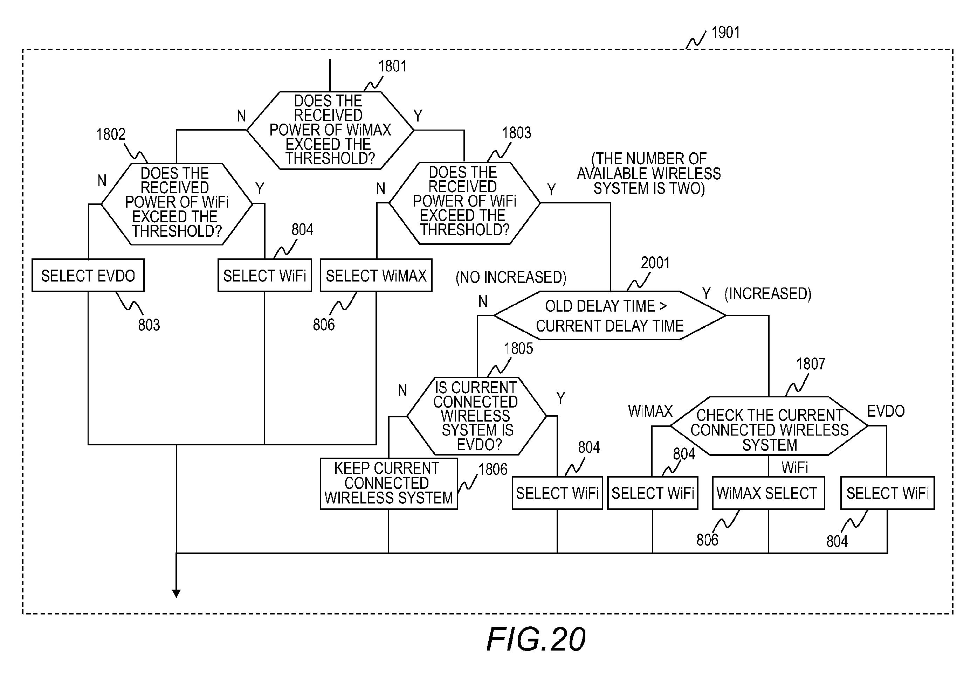

FIG. 20 illustrates the wireless system selection process (1901) according to the present embodiment in detail. A part of the steps in the process shown in FIG. 20 are the same as those in the processes illustrated in FIG. 8 and FIG. 18; they are denoted by the same reference numerals. The difference in FIG. 20 from FIG. 8 and FIG. 18 is comparing the previous delay time with the current delay time in (2001) to determine the wireless system to be connected from the subject terminal depending on whether the delay time has increased or not. To prevent frequent changes of wireless systems because of slight variations in the delay time, the monitoring node does not determine that the delay time has increased if the increase is within a predetermined range. Here, the predetermined range is the variation in the delay time within 2%, for example.

As set forth above, according to the fourth embodiment, the monitoring node periodically monitors the delay time of each terminal, and, if it has detected an increase in the delay time, it determines whether to change the wireless system. Thereby, the transmission delay time in the whole system can be minimized.

In the third and the fourth embodiments, throughputs and delay time are employed as indexes to determine whether to change the wireless system. In addition, packet loss rate (if the packet loss rate has become higher, the determination whether to change the wireless systems is performed), the number of terminals connecting to the wireless systems and the number of associations (if the number of terminals connecting to the wireless systems and the number of associations increase, the determination whether to change the wireless systems is performed), and the like may be used as indexes.

In the embodiments described in this invention, the wireless system selection methods have been described in the case that the number of indexes is one in determining whether to change the systems. However, the wireless system to be connected from a terminal may be determined by referring to the combination of two or more indexes. For example, throughputs and delay time may be combined to improve the throughput in the whole system and the wireless system with the shortest transmission delay time may be selected. In this invention, throughputs, transmission delay time, packet loss rate, the number of terminals currently connecting to the wireless systems and the number of associations, and the quality requested by a user application program, and the like may be the indexes to be combined.

This invention is applicable to a system that is operated as a system using a plurality of wireless systems such as mobile phones and wireless LANs simultaneously and aims to improve time use efficiency of frequency and to disperse the loads of wireless systems.

## Claims

1. A network system controlling a plurality of wireless systems, comprising:
access points of the respective wireless systems;
gateways for terminating the respective wireless systems;
a certificate authority;
a home agent;
a monitoring node;
a control node; and
a terminal device connects to the plurality of wireless systems, wherein
the monitoring node connects to the access points in the respective wireless systems and obtains information about the terminal device,
the control node changes the wireless systems to which the terminal device connects in accordance with instructions of the monitoring node, and
the monitoring node selects one of the plurality of the wireless systems to which the terminal device connects in accordance with the information about the terminal device obtained by the monitoring node.

2. The network system controlling a plurality of wireless systems according to claim 1, wherein,
when the terminal device tries to change the wireless systems, the monitoring node estimates a throughput in each case that the terminal device connects to a different wireless system and selects one of the plurality of the wireless system to which the terminal device connects in accordance with the estimated results so that throughput in the whole system is a maximum.

3. The network system controlling a plurality of wireless systems according to claim 1, wherein,
when the terminal device tries to change the wireless systems, the monitoring node estimates transmission delay time in each case that the terminal device connects to a different wireless system and selects one of the plurality of the wireless system to which the terminal device connects in accordance with the estimated results so that transmission delay time in the whole system is a minimum.

4. A monitoring node coupled to access points of a plurality of wireless systems, gateways for terminating the plurality of wireless systems, a certificate authority, a home agent, a control node, and terminal device connects to the plurality of wireless systems, wherein
the monitoring node communicates with the access points of the plurality of wireless systems, obtains information about the terminal device, and selects one of the plurality of the wireless systems to which the terminal device connects in accordance with the obtained information about the terminal device.

5. The monitoring node according to claim 4, wherein,
when the terminal device tries to change the wireless systems, the monitoring node estimates a throughput in each case that the terminal device connects to a different wireless system and selects one of the plurality of the wireless system to which the terminal device connects in accordance with the estimated results so that throughput in the whole system will be a maximum.

6. The monitoring node according to claim 4, wherein,
when the terminal device tries to change the wireless systems, the monitoring node estimates transmission delay time in each case that the terminal device connects to a different wireless system and selects one of the plurality of the wireless system to which the terminal device connects in accordance with the estimated results so that transmission delay time in the whole system is a minimum.

7. The network system controlling a plurality of wireless systems according to claim 1, wherein
the monitoring node periodically obtains a throughput of the terminal device, and, in a case where the throughput of the terminal device has decreased from a previously obtained throughput, the monitoring node selects a different wireless system to which the terminal device connects from the plurality of wireless systems.

8. The network system controlling a plurality of wireless systems according to claim 1, wherein
the monitoring node periodically obtains transmission delay time of the terminal device, and, in a case where the transmission delay time of the terminal device has increased from previously obtained transmission delay time, the monitoring node selects a different wireless system to which the terminal device connects from the plurality of wireless systems.
